# EUROPÄISCHE PATENTSCHRIFT

(11) **EP 3 485 552 B1**
(45) Veröffentlichungstag und Bekanntmachung des Hinweises auf die Patenterteilung: **28.10.2020**
(21) Anmeldenummer: 16760479.2
(22) Anmeldetag: 02.09.2016
(51) Int. Cl.: H02J 3/28, H02J 3/32

(54) **EINRICHTUNG ZUR DYNAMISCHEN STABILISIERUNG DER NETZFREQUENZ EINES VERBUNDNETZES ZUR ELEKTRISCHEN ENERGIEVERSORGUNG**
DEVICE FOR DYNAMICALLY STABILIZING THE NETWORK FREQUENCY OF AN INTERCONNECTION FOR SUPPLYING ELECTRICAL ENERGY
DISPOSITIF DE STABILISATION DYNAMIQUE DE LA FRÉQUENCE RÉSEAU D'UN RÉSEAU COMPOSITE DESTINÉ À L'ALIMENTATION EN ÉNERGIE ÉLECTRIQUE

(43) Veröffentlichungstag der Anmeldung: 22.05.2019
(73) Patentinhaber: Siemens Aktiengesellschaft, 80333 München (DE)
(72) Erfinder: KRAJISNIK, Nemanja, 90443 Nürnberg (DE); SPAHIC, Ervin, 91052 Erlangen (DE)
(86) Internationale Anmeldenummer: PCT/EP2016/070739
(87) Internationale Veröffentlichungsnummer: WO 2018/041364

(56) Entgegenhaltungen:
- WO-A1-99/53592
- WO-A1-2016/070922
- DE-A1- 3 311 299
- US-A1- 2011 098 866

## Beschreibung

Die Erfindung betrifft eine Einrichtung zur dynamischen Stabilisierung der Netzfrequenz eines Verbundnetzes zur elektrischen Energieversorgung gemäß dem Oberbegriff des Anspruchs 1.

Die elektrische Energieversorgung erfolgt bekanntermaßen mittels Verbundnetzen, die aus miteinander verbundenen Übertragungsleitungen gebildet sind. An die Übertragungsleitungen sind Energieerzeuger angeschlossen, die z.B. mittels von Gasturbinen angetriebenen Stromgeneratoren elektrische Energie mit einer vorgegebenen Netzfrequenz erzeugen und für an das Verbundnetz angeschlossene Verbraucher in das Verbundnetz einspeisen. Die Zu- und Abschaltung von Verbrauchern und Erzeugern kann dazu führen, dass die Netzfrequenz von der Vorgabe, der nominalen Frequenz z.B. von 50 Hz, abweicht. Die auftretenden Abweichungen von der nominalen Frequenz (der Soll-Frequenz) werden durch die Energieerzeuger jeweils ausgeregelt, indem die Gasturbinen z.B. stärker oder schwächer angetrieben werden. Dabei dürfen die Abweichungen eine netzabhängige obere und untere Grenzfrequenz nicht über- bzw. unterschreiten, d.h. jede positive Abweichung von der Soll-Frequenz muss unterhalb der oberen Grenzfrequenz und jede negative Abweichung muss oberhalb der unteren Grenzfrequenz liegen.

Das Ausregeln der Abweichungen durch die Energieerzeuger selbst hat den Nachteil, dass deren Regelgeschwindigkeit deutlich begrenzt ist, beispielsweise aufgrund ihrer Trägheit und/oder begrenzten Leistungsfähigkeit.

Die Aufgabe der Erfindung ist es, eine Einrichtung zur dynamischen Stabilisierung der Netzfrequenz eines Verbundnetzes der elektrischen Energieversorgung vorzuschlagen, die insbesondere schnell auf Abweichungen der Netzfrequenz von der Soll-Frequenz reagieren kann.

Die Lösung ist durch die Merkmale des Anspruchs 1 gegeben; die Unteransprüche stellen vorteilhafte Ausgestaltungen dar.

Die Lösung sieht vor, dass ein Serien-Transformator vorhanden ist, dessen Primärwicklung an einer Kopplungsstelle einer Leitung angekoppelt ist, dass ein Stromrichter an die Sekundärwicklung des Serien-Transformators angeschlossenen ist, der einen Gleichstromkreis mit einem Energiespeicher aufweist, und dass zum Ausregeln zusätzlich jeweils über den Stromrichter bei einer positiven Abweichung ein Auskoppeln und bei einer negativen Abweichung ein Einkoppeln einer (zweiten) elektrischen Leistung (Energiespeicherleistung) aus dem Energiespeicher in die bzw. aus der Leitung erfolgt.

Die Erfindung wird nachfolgend anhand einer Zeichnung näher beschrieben. Es zeigen
- Fig. 1: eine elektrische Leitung zur Energieübertragung mit einer Einrichtung zur dynamischen Stabilisierung der Netzfrequenz mittels eines Stromrichters,
- Fig. 2: Verläufe der Netzfrequenz aufgetragen über der Zeit nach einem Abfall der Netzfrequenz,
- Fig. 3: den zeitlichen Verlauf der mittels des Stromrichters in die Leitung eingespeisten elektrischen Leistung,
- Fig. 4: die spannungsmäßige Situation bei der Einspeisung der Leistung in Form eines Vektordiagramms und
- Fig. 5: eines von mehreren Vollbrückenmodulen, die elektrisch in Reihe geschaltet den Stromrichter bilden.

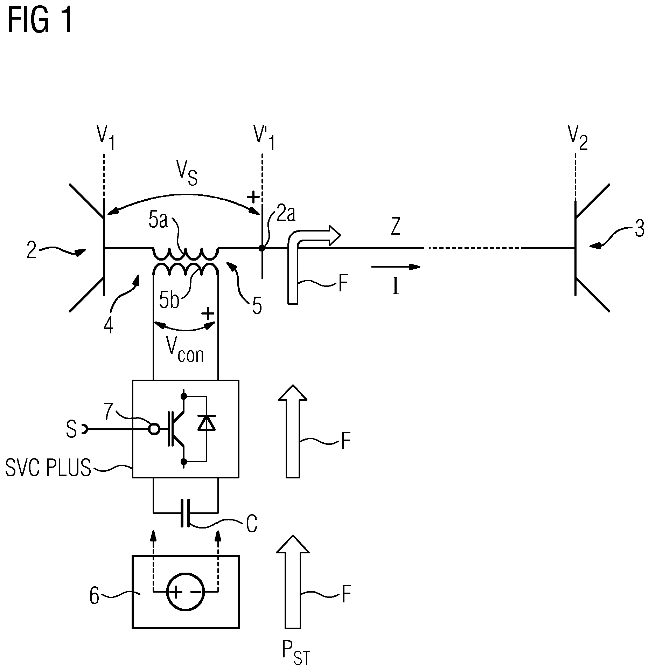

Fig. 1 zeigt eine schematische Darstellung einer Leitung (Übertragungsleitung) 1 eines Verbundnetzes (Übertragungsnetzes) zur dreiphasigen elektrischen Energieversorgung, das aus mehreren elektrisch miteinander verbundenen Leitungen 1 gebildet ist. An das Verbundnetz sind hier beispielhaft mehrere Verbraucher und Energieerzeuger (alle nicht gezeigt) angeschlossen, z.B. mittels Gasturbinen angetriebene Stromgeneratoren, wobei die Energieerzeuger jeweils eine (erste) elektrische Leistung (Wirkleistung) in das Verbundnetz einspeisen. Die Leitung 1 dient zur Energie- und Leistungsübertragung innerhalb des Verbundnetzes.

Die zu übertragende elektrische Leistung (elektrische Energie) wird an einer einspeisenden Stelle (Einspeisestelle) 2, hier an einem Ende der Leitung 1, in die Leitung 1 eingekoppelt und an einer entnehmenden Stelle (Entnahmestelle) 3 entnommen, hier beispielhaft am anderen Ende der Leitung 1. An der einspeisenden Stelle 2 liegt eine Wechselspannung V1 (mit einem Spannungswinkel d1) an und ein Wechselstrom I fließt über die Leitung 1. An der entnehmenden Stelle 3 ist eine Wechselspannung V2 (mit einem Spannungswinkel d2) vorhanden, die quasi an dieser Stelle 3 (z.B. an einem Verbraucher) abfällt. Die Leitung 1 weist den (komplexen) Leitungswiderstand Z auf.

An einer Kopplungsstelle 4 ist die Primärwicklung 5a eines Serientransformators 5 an die Leitung 1 angekoppelt, die sich zwischen der ersten und zweiten Stelle 2, 3 befindet, in Fig. 1 mehr auf Seiten der einspeisenden Stelle 3. Die Primärwicklung 5a wird vom Wechselstrom I durchflossen.

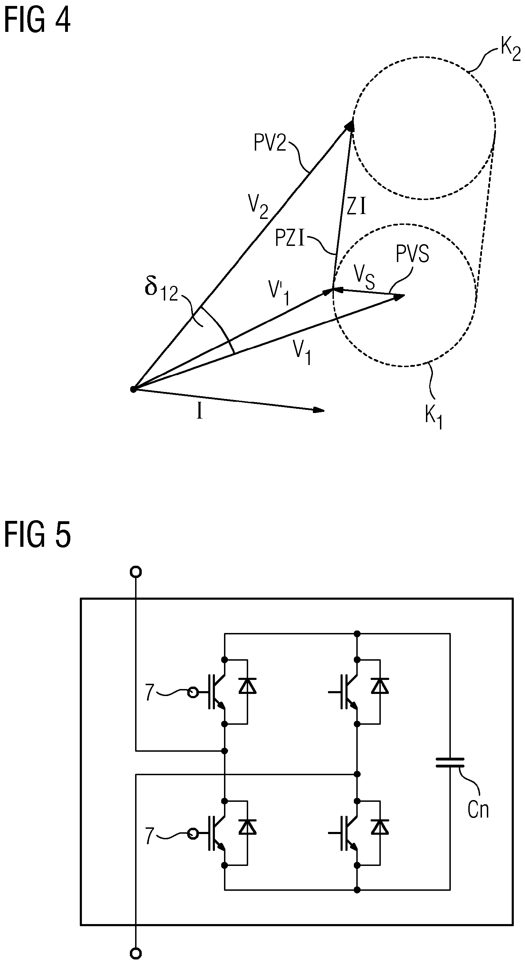

Über den Serientransformator 5 ist ein Stromrichter SVC PLUS (SVC: Voltage Source Converter) zur Leistungseinkopplung an die Leitung 1 angekoppelt, wobei der Stromrichter SVC PLUS an die Sekundärwicklung 5b des Serientransformators 5 angeschlossen ist. Der Stromrichter SVC PLUS weist einen Gleichstromkreis DC mit einem Energiespeicher 6 auf, der als Kondensator C ausgebildet sein kann und deshalb in Fig. 1 schematisch durch einen Kondensator C dargestellt ist. Der Stromrichter SVC PLUS ist als modularer Mehrstufenumrichter ausgebildet, bei dessen elektrisch in Reihe geschalteten Modulen es sich um Vollbrückenmodule handelt (s. Fig. 5).

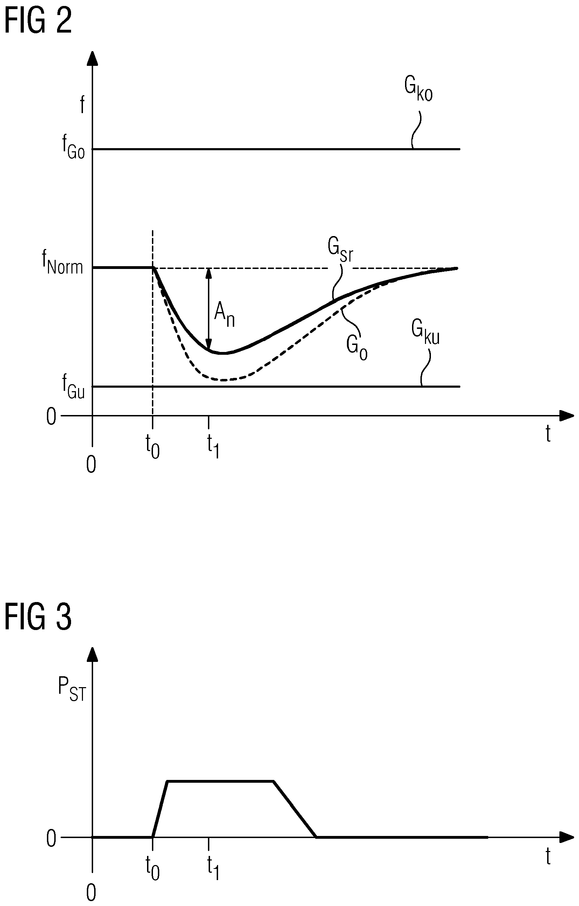

Fig. 2 zeigt beispielhaft Verläufe der Netzfrequenz f aufgetragen über der Zeit t in Form der Kurven Go, Gk, Gsr jeweils bei einem Abfall der Netzfrequenz f zum Zeitpunkt t0.

Die Kurve Go zeigt den resultierenden Verlauf der Netzfrequenz f zum besseren Verständnis zunächst bei abgeschaltetem Stromrichter SVC PLUS.

Bis zum Zeitpunkt t0 ist die Netzfrequenz f im Wesentlichen gleich der vorgegebenen nominalen Frequenz fNom von 50 Hz des Verbundnetzes. Zum Zeitpunkt t0 fällt die Netzfrequenz f plötzlich ab, beispielsweise durch Zuschalten eines größeren Verbrauchers oder durch Abschalten eines Energieerzeugers. Der Abfall der Netzfrequenz f wird von einem Energieerzeuger (oder mehreren Energieerzeugern) mit der Zeit ausgeglichen, d.h. ein erster Ausgleich erfolgt durch den oder die Energieerzeuger selbst. Das Ausgleichen kann z.B. dadurch erfolgen, dass die Gasturbine eines Stromgenerators solange stärker angetrieben wird, bis die nominalen Frequenz fNom wieder erreicht ist bzw. sich die Netzfrequenz f der nominalen Frequenz fNom mit der Zeit t wieder hinreichend angenähert hat.

Die Kurve Gku stellt eine Grenzkurve dar, die von einer zur Zeitachse parallelen Geraden gebildet ist und in dem gegebenen Verbundnetz mit den gegebenen Energieerzeugern nicht unterschritten werden darf, d.h. die Netzfrequenz f muss jeweils oberhalb der Frequenzkurve Gku liegen, also oberhalb der Grenzfrequenz fu. Analog stellt die Kurve Gko die Grenzkurve dar, die nicht überschritten werden darf, also jeweils unterhalb der Grenzfrequenz fo liegen muss.

Zum schnelleren Ausregeln der auftretenden Abweichungen An der Netzfrequenz f von der Soll-Frequenz fNom wird durch den Stromrichter SVC PLUS zum Zeitpunkt t0 eine (zweite) elektrische Leistung (Wirkleistung) PST über die Sekundärwicklung 5b des Serientransformators 5 in die Leitung 1 eingekoppelt, wie in Fig. 1 schematisch durch Pfeile F dargestellt. Es ergibt sich beispielhaft die Kurve Gsr, d.h. der Frequenzabfall wird deutlich stärker abgefangen und die nominale Netzfrequenz fNom schneller wieder erreicht. Wie schnell ist im Wesentlichen durch den Ladezustand und die Kapazität des Energiespeichers 6 gegeben.

In Fig. 3 ist der zeitliche Verlauf der in die Leitung 1 eingespeisten elektrischen Leistung PST schematisch dargestellt. Man erkennt den schnellen Anstieg der eingekoppelten Leistung PST. Die Länge des Plateaus, also wie lange der Energiespeicher 6 eine (hier konstante) Leistungseinkopplung aufrechterhalten kann, hängt ebenfalls vom Ladezustand und der Kapazität des Energiespeichers 6 ab.

Zur Steuerung (Regelung) der Leistungseinkopplung wird abhängig von der Abweichung An der Netzfrequenz f von der Soll-Frequenz fNom ein entsprechendes Steuersignal S an den Ansteuereingang 7 gegeben.

Der Abfall der Netzfrequenz f wird hier als negative Abweichung An der Netzfrequenz f von der vorgegebenen nominalen Frequenz fNom bezeichnet (Netzfrequenz f kleiner als die nominale Frequenz fNom), im Gegensatz zur positiven Abweichung Ap im umgekehrten Fall (Netzfrequenz f größer als die nominale Frequenz fNom).

Fig. 4 zeigt der Vollständigkeit halber noch die spannungsmäßige Situation bei der Leistungseinkopplung.

Dazu sind in Fig. 4 die beiden Wechselspannungen V1, V2 mit ihrer Spannungswinkel-Differenz d12 beispielsweise zum Zeitpunkt t1 in einem Vektordiagramm dargestellt. Der Zusammenhang zwischen den beiden Wechselspannungen V1, V2, dem Wechselstrom I und der Leitung 1 ist durch den Leitungswiderstand Z gegeben.

Die Einkopplung der Wirk-Leistung PST durch den Stromrichter SVC PLUS als aktiv steuerbares Element erfolgt - wie bereits erläutert - abhängig von der Abweichung An der Netzfrequenz f von der Soll-Frequenz fNom. Bei spannungsmäßiger Betrachtung erzeugt der Stromrichter SVC PLUS dazu eine entsprechende Wechselspannung Vcon an der Wicklung 5b des Serientransformators 5, was an der Wicklung 5a mit einer Wechselspannung Vs verbunden ist.

Die resultierende Wechselspannung V1' (s. Fig. 1) ergibt sich bei einer durch den Stromrichter SVC PLUS generierten Wechselspannung Vs wie in Fig. 4 dargestellt. (Abhängig vom Spannungswinkel d3 der Wechselspannung Vs bewegt sich die Pfeilspitze des Pfeils PVs auf einem Kreis K1 und synchron dazu bewegen sich die Pfeilspitzen der Pfeile PV2 und PZI auf einem Kreis K2.)

Wesentlich ist hierbei, dass die in die Leitung 1 eingekoppelte Wirk-Leistung PST nur von der Wechselspannung Vs abhängt, nicht aber von den Spannungswinkeln d1, d2, d3. Bezogen auf die Vektoren in Fig. 4 heißt das, dass die eingekoppelte Wirk-Leistung PST nur von der Länge des Pfeils PVS abhängt, also durch die Amplitude der Wechselspannung Vs bestimmt ist.

Zur Leistungsauskopplung bei einer positiven Abweichung Ap der Netzfrequenz f von der vorgegebenen nominalen Frequenz fNom wird der Stromrichter SVC PLUS umgekehrt betrieben und der Energiespeicher 6 entsprechend aufgeladen. In diesem Fall zeigen die Pfeile F in Fig. 1 in die entgegensetzte Richtung. In Fig. 5 ist beispielhaft eines der Vollbrückenmodule gezeigt, die elektrisch in Reihe geschaltet den Stromrichter SVC PLUS bilden, wobei der Kondensator Cn des Vollbrückenmoduls eine Teilkapazität des in Fig. 1 schematisch als Kondensator C dargestellten Energiespeichers 6 bildet.

## Patentansprüche

1. Einrichtung zur dynamischen Stabilisierung der Netzfrequenz (f) eines Verbundnetzes zur elektrischen Energieversorgung, das zumindest eine elektrische Leitung (1) aufweist, an die mindestens ein Verbraucher und mindestens ein Energieerzeuger angeschlossen sind, der jeweils eine erste elektrische Leistung bei einer vorgegebenen Soll-Frequenz (fNom) in das Verbundnetz einspeist,
mit einer Ausregelung von auftretenden Abweichungen (An, Ap) der Netzfrequenz (f) von der Soll-Frequenz (fNom) durch den mindestens einen Energieerzeuger,
mit einer oberen und einer unteren Grenzfrequenz (fGo, fGu), wobei jede positive Abweichung (Ap) unterhalb der oberen Grenzfrequenz (fGo) und jede negative Abweichung (An) oberhalb der unteren Grenzfrequenz (fGu) liegt,
**dadurch gekennzeichnet,**
**dass** ein Serien-Transformator (5) vorhanden ist, dessen Primärwicklung (5a) an einer Kopplungsstelle (4) einer Leitung (1) angekoppelt ist,
**dass** ein Stromrichter (SVC PLUS) an die Sekundärwicklung (5b) des Serien-Transformators (5) angeschlossenen ist, der einen Gleichstromkreis (DC) mit einem Energiespeicher (C) aufweist, und
**dass** zum Ausregeln jeweils auch über den Stromrichter (SVC PLUS) bei einer positiven Abweichung (Ap) ein Auskoppeln und bei einer negativen Abweichung (An) ein Einkoppeln einer zweiten elektrischen Leistung (PST) in die Leitung (1) erfolgt, wobei die zweite elektrische Leistung (PST) eine Wirkleistung ist.

2. Einrichtung nach Anspruch 1,
**dadurch gekennzeichnet,**
**dass** der Stromrichter (SVC PLUS) als modularer Mehrstufenumrichter ausgebildet ist.

3. Einrichtung nach Anspruch 2,
**dadurch gekennzeichnet,**
**dass** die Module des Mehrstufenumrichters als Vollbrückenmodule ausgebildet und elektrisch in Reihe geschaltet sind.

## Claims

1. Device for dynamically stabilizing the grid frequency (f) of an integrated grid for supplying electric power, which integrated grid has at least one electrical line (1) to which at least one consumer and at least one energy generator are connected, which energy generator in each case feeds a first electric power into the integrated grid at a predefined setpoint frequency (fNom),
with compensation of deviations (An, Ap) that occur of the grid frequency (f) from the setpoint frequency (fNom) through the at least one energy generator,
having an upper and a lower limit frequency (fGo, fGu), wherein each positive deviation (Ap) is below the upper limit frequency (fGo) and each negative deviation (An) is above the lower limit frequency (fGu),
**characterized**
**in that** a series transformer (5) is present, the primary winding (5a) of which is coupled to a coupling point (4) of a line (1),
**in that** a converter (SVC PLUS) is connected to the secondary winding (5b) of the series transformer (5), which converter has a DC current circuit (DC) having an energy store (C),
and
**in that**, for the compensation, the converter (SVC PLUS) also in each case couples a second electric power (PST) out of the line (1) in the case of a positive deviation (Ap) and couples a second electric power (PST) into the line (1) in the case of a negative deviation (An), wherein the second electric power (PST) is an active power.

2. Device according to Claim 1,
**characterized**
**in that** the converter (SVC PLUS) is designed as a modular multi-level converter.

3. Device according to Claim 2,
**characterized**
**in that** the modules of the multi-level converter are designed as full-bridge modules and are connected electrically in series.

## Revendications

1. Dispositif de stabilisation dynamique de la fréquence (f) de réseau d'un réseau composite d'alimentation en énergie électrique, qui a au moins une ligne (1) électrique, à laquelle sont raccordés au moins un consommateur et au moins un producteur d'énergie, qui injectent chacun une première puissance électrique à une fréquence (fNom) de consigne donnée à l'avance dans le réseau composite,
comprenant un réglage d'écarts (An, Ap) se produisant de la fréquence (f) du réseau à la fréquence (fNom) de consigne par le au moins un producteur d'énergie,
comprenant une fréquence (fGo) limite supérieure et une fréquence (fGu) limite inférieure, chaque écart (Ap) positif se trouvant en dessous de la fréquence (fGo) limite supérieure et chaque écart (An) négatif au-dessus de la fréquence (fGu) limite inférieure,
**caractérisé**
**en ce qu'**il y a un transformateur (5) série, dont l'enroulement (5a) primaire est connecté à un point (4) de connexion d'une ligne (1),
**en ce qu'**à un enroulement (5b) secondaire du transformateur (5) série est raccordé un convertisseur (SVC PLUS), qui a un circuit (DC) de courant continu ayant un accumulateur (C) d'énergie, et
**en ce que**, pour régler, respectivement, également par le convertisseur (SVC PLUS), il est produit, lors d'un écart (Ap) positif, une extraction et, lors d'un écart (An) négatif, une injection d'une deuxième puissance (PST) électrique dans la ligne (1), la deuxième puissance (PST) électrique étant une puissance active.

2. Dispositif suivant la revendication 1,
**caractérisé**
**en ce que** le convertisseur (SVC PLUS) est constitué sous la forme d'un convertisseur à plusieurs étages.

3. Dispositif suivant la revendication 2,
**caractérisé**
**en ce que** les modules du convertisseur à plusieurs étages sont constitués sous la forme de modules à pont complet et sont montés électriquement en série.
